# EUROPEAN PATENT SPECIFICATION

(11) **EP 1 837 094 B1**
(45) Date of publication and mention of the grant of the patent: **26.08.2009**
(21) Application number: 07104398.8
(22) Date of filing: 19.03.2007
(51) Int. Cl.: B21D 39/03, B21J 15/02, F16B 5/04

(54) **A method for fastening plate-like members and fastening structure for plate-like members**
Verfahren zur Befestigung plattenartiger Elemente und Befestigungsstruktur für plattenartige Elemente
Procédé de fixation d'éléments en forme de plaque et structure de fixation pour éléments en forme de plaque

(30) Priority: 20.03.2006 JP 2006076453
(43) Date of publication of application: 26.09.2007
(73) Proprietor: Ricoh Company, Ltd., Tokyo 143-8555 (JP)
(72) Inventor: Ishino, Keiji, Ohta-ku Tokyo 143-8555 (JP); Kondo, Takafumi, Ohta-ku Tokyo 143-8555 (JP); Takahashi, Yoshio, Kanagawa 243-0205 (JP); Kurihara, Hirokazu, Ohta-ku Tokyo 143-8555 (JP)
(74) Representative: Schwabe - Sandmair - Marx

(56) References cited:
- DE-A1- 2 841 937
- DE-A1- 10 314 544
- JP-A- 61 123 430
- JP-A- 61 172 631
- US-A- 2 321 755
- ANONYMOUS: "Parent upset material punch and stake attachment system" RESEARCH DISCLOSURE, MASON PUBLICATIONS, HAMPSHIRE, GB, vol. 363, no. 1, July 1994 (1994-07), XP007119825 ISSN: 0374-4353

## Description

The present invention relates to a fastening method for mutually fastening, for example, two plate-like members, especially metal plates.

As a structure for fixing a member to a metal plate, JP 2001-129623A proposes a structure which has a shaft-like protruding portion with a specific shape on a surface of the metal plate and a part is fixed to the protruding portion of the structure.

However, in the structure mentioned above, since the shape of the shaft-like protruding portion is complex, and it requires man-hours to perform the molding process of the shaft-like protruding portion, and further, since the shaft-like protruding portion is made by compression forming, and wear-out of the metal mold and so on is great making the total mold cost including maintenance high, such a structure is not economical to manufacture.

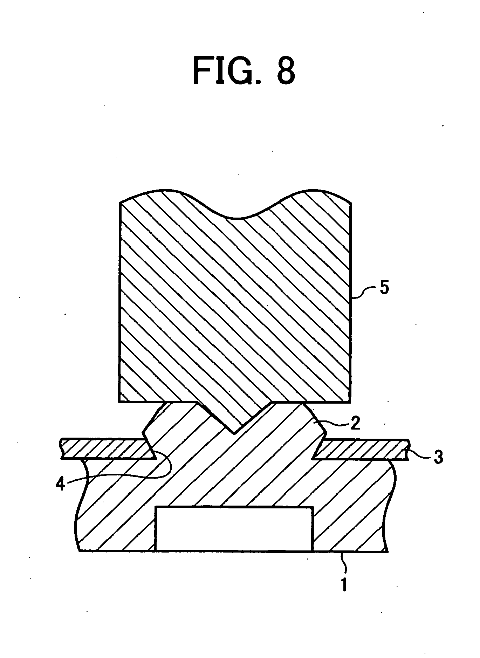

Therefore, in JP 2004-376741, filed by the same applicant, the following technology is proposed. That is to say, as an example of a case in which two plate-like members arc fastened mutually, as illustrated in FIG. 8, the technology includes the steps of: forming a convex part 2 on a surface of one plate-like member 1, and forming a through-hole 4 which has a larger diameter than a diameter of the convex part 2 in another plate-like member 3, and after inserting the convex part 2 through the through-hole 4, pressing a head of the convex part 2 to expand rightward and leftward by a punch 5, and then the two plate-like members 1 and 3 are fastened mutually by sandwiching in the vicinity of the through-hole 4 of the plate-like member 3 by means of an expanded portion and the surface of the plate-like member 1.

However, in the technology disclosed in JP 2004-376741, there is a problem in that when the head of the convex part 2 is pressed to expand rightward and leftward by the punch 5, if the pressure is not applied uniformly rightward and leftward, and the plate thickness of the plate-like member 3 in which the through-hole 4 is formed is thin, the vicinity of the through-hole 4 of the plate-like member 3 is distorted and the two plate-like member 1 and 3 can not be fastened with high accuracy.

In addition, even in a case where the two plate-like members 1 and 3 are fastened without distortion, the atmospheric temperature decreases to be lower than the temperature when fastening in a state where the stress remains in the vicinity of the through-hole 4 of the plate-like member 3, and further, the plate-like member 3 shrinks and the internal stress surpasses the strength of the material, distortions occur (especially at a low temperature) and required functions may not be achieved.

DE 103 14 544 A1 relates to an interlocking connection between thin-walled materials. The first contact surface has a projecting connector at given height (h). The second has a complementary contact area with a passage to accommodate it. Wall thickness near the opening is less than (h). Connection between the sheets is made by insertion, and the connector is then riveted-over, under pressure by a form tool. This displaces material from the central zone to the edges of the connector, where it grips behind the opening.

It is an object of the present invention to provide a method for fastening plate-like members in order to improve the accuracy and reduce the distortion in the vicinity of the through-hole of the other plate-like member.

In order to achieve the above-mentioned object, two alternative methods fastening plate-like members according to claims 1 and 4 are provided.

Advantageous embodiments are defined by the dependent claims.

A method for fastening plate-like members includes the steps of: forming a convex part on a surface of one plate-like member, forming a through-hole which has a larger diameter than a diameter of the convex part in another plate-like member; after inserting the convex part through the through-hole, pressing a top surface of the convex part with a first pressurizing tool which includes at least one pointed end portion having a smaller contour than a contour of the convex part to make a cut matching the at least one pointed end portion of the first pressurizing tool at the top surface of the convex part; further pressing to expand an outer portion of the cut outwardly by means of a second pressurizing tool; and fastening the two plate-like members mutually by sandwiching in the vicinity of the through-hole of the other plate-like member by means of an expanded portion formed on the convex part and the surface of the one plate-like member.

Advantageously, the outer portion of the cut is pressed to expand outwardly by the second pressurizing tool, therefore, the pressure is applied to the outer portion of the cut uniformly, and even in a case where the plate thickness of the other plate-like member in which the through-hole is formed is thin, it is possible to fasten the two plate-like members with high accuracy without distortion occurring in the vicinity of the through-hole of the other plate-like member. Moreover, because the vicinity of the through-hole of the other plate-like member does not become distorted, no stress remains in the vicinity of the through-hole, and thus it is not influenced by the temperature change either.

Advantageously, the first pressurizing tool includes a tool which has the at least one pointed end portion formed by a vertical surface of a central axis side wall surface of the tool, and an inclined surface of an outside wall surface of the tool.

Advantageously, it is possible to reduce an interval between pointed end portions, and thus the method can be realized even when the convex part of the one plate-like member is reduced and/or the through-hole of the other plate-like member is reduced.

Advantageously, the first pressurizing tool includes a tool which has the at least one pointed end portion formed by inclined surfaces of the central axis side wall surface and the outside wall surface of the tool.

Advantageously, the strength of the pointed end portion can be improved.

An alternative method for fastening plate-like members includes the steps of: forming a convex part on a surface of one plate-like member; forming a through-hole which has a larger diameter than a diameter of the convex part in another plate-like member; after inserting the convex part through the through-hole, pressing a top surface of the convex part with a pressurizing tool which includes at least one pointed end portion having a smaller contour than a contour of the convex part and at least one flat portion located outside the at least one pointed end portion to make a cut matching the at least one pointed end portion of the pressurizing tool at the top surface of the convex part; further pressing to expand an outer portion of the cut outwardly by the pressurizing tool; and fastening the two plate-like members mutually by sandwiching in the vicinity of the through-hole of the other plate-like member by means of an expanded portion formed on the convex part and the surface of the one plate-like member.

Advantageously, it is possible to achieve an effect that fastens the two plate-like members with only one pressurizing tool, in addition to the effect mentioned above.

Advantageously, the pressurizing tool includes a tool which has the at least one pointed end portion formed by inclined surfaces of a central axis side wall surface and an outside wall surface of the tool, and at least one flat portion located outside the outside wall surface.

Advantageously, the strength of the pointed end portion can be improved.

Advantageously, the convex part is formed on the surface of the one plate-like member by pressing and half die cutting a back surface side of the one plate-like member.

Advantageously, it is possible to form the convex part on the surface of the one plate-like member easily.

Advantageously, the fastening strength between the two plate-like members is adjusted by controlling the cut size when making the cut along the at least one pointed end portion at the top surface of the convex part.

Advantageously, it is possible to control the fastening strength when fastening the members, therefore it is possible to obtain a required fastening strength easily.

Advantageously, an impression of the cut made by the at least one pointed end portion remains at the circumference of the convex part, when the outer portion of the cut is pressed to expand outwardly.

Advantageously, it is possible to reliably achieve a required fastening condition.

Advantageously, an impression of the cut made by the at least one pointed end portion is obliterated at the circumference of the convex part, when the outer portion of the cut is pressed to expand outwardly.

Advantageously, it is possible to reliably achieve a required fastening condition.

A fastening structure which fastens one plate-like member and another plate-like member includes: a convex part formed on a surface of the one plate-like member; and a through-hole formed in the other plate-like member that receives the convex part of the one plate-like member, wherein an expanded portion where the circumference of the convex part is expanded outwardly is formed at the convex part when the convex part is inserted through the through-hole, and the two plate-like members are fastened mutually by sandwiching in the vicinity of the through-hole of the other plate-like member by means of the expanded portion and the surface of the one plate-like member.

Advantageously, in the one plate-like member, a concave part is formed on a back side of the one plate-like member where the convex part is formed.

Advantageously, an impression of a wedge-shaped cross-section remains at the circumference of the convex part.

The invention will be described further below with reference to embodiments and the accompanying schematic drawings.
FIGs. 1A, 1B and 1C illustrate a fastening method for fastening plate-like members according to a first embodiment of the present invention. FIG. 1A illustrates a state in which a convex part of a support plate is inserted through a through-hole of a spring plate; FIG. 1B illustrates a state in which a cut is made at the convex part; and FIG. 1C illustrates a state in which pressing is performed to expand an outer portion of the cut.
FIG. 2 illustrates a fastening method for fastening plate-like members according to a second embodiment of the invention.
FIGs. 3A and 3B illustrate that the cut size relative to the convex part is controllable. FIG. 3A illustrates an example of a case in which no impression of the cut remains; and FIG. 3B illustrates an example of a case in which an impression of the cut remains.
FIGs. 4A and 4B illustrate that the cut size relative to the convex part is controllable in a case in which a concave part is not formed on a back side of the support plate. FIG. 4A illustrates an example of a case in which no impression of the cut remains; and FIG. 4B illustrates an example of a case in which an impression of the cut remains.
FIGs. 5A and 5B illustrate shapes of pointed end portions located at a lower portion of a punch. FIG. 5A illustrates an example of a case in which a central axis side wall surface has a vertical surface and an outside wall surface has an inclined surface; and FIG. 5B illustrates an example of a case in which both of the central axis side wall surface and the outside wall surface have an inclined surface.
FIG. 6 illustrates an image development section of an image-forming device.
FIG. 7 is a perspective view illustrating a spring member fastened to the support plate.
FIG. 8 illustrates a method for fastening plate-like members according to a conventional technology.

### Embodiment 1

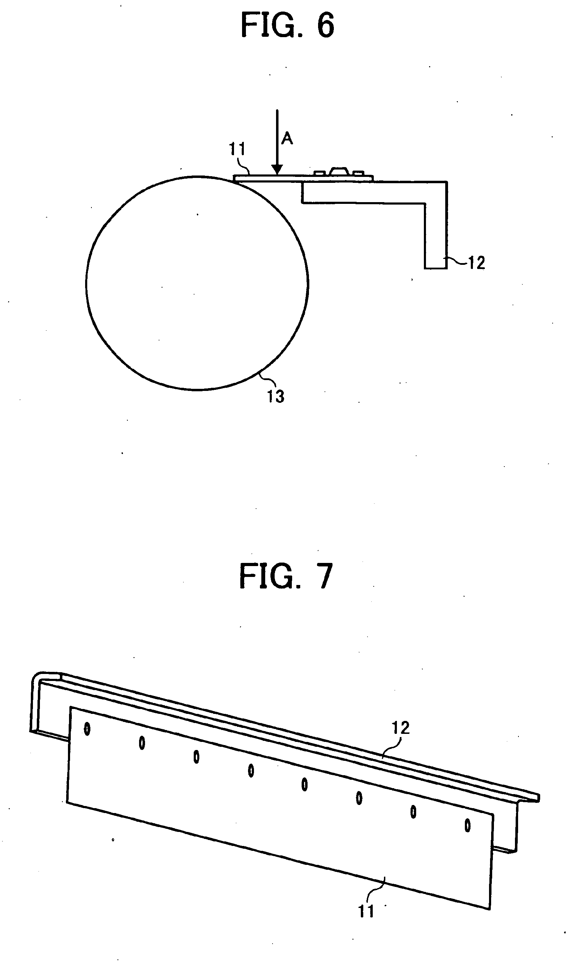

FIG 6 illustrates an image development section of an image-forming device. In the image development section, a spring member 11 which is a thin plate is supported by a support plate 12 having a cross-section in an "L" shape, and the spring member 11 presses a photoreceptor drum 13 in a direction shown by an arrow "A" illustrated in FIG 6.

FIG 7 illustrates the spring member 11 fastened to the support plate 12. A fastening method for fastening plate-like members (or a fastening structure for plate-like members) according to an embodiment of the present invention is used, for example, in a case that fastens the spring member 11 to the support plate 12.

Since a uniform pressing force applied to an end portion of the spring member 11 is required, the spring member 11 is used after being fastened to a holder member with the strength. To obtain the uniform pressing force in the fastening, numerous fastening locations and high straightness at the end of the spring member arc necessary, and corrugation of the end and so on should not be generated. In addition, an ambient working temperature of the spring member 11 can not be specified, and a steady pressing force which is not influenced by a temperature change is required.

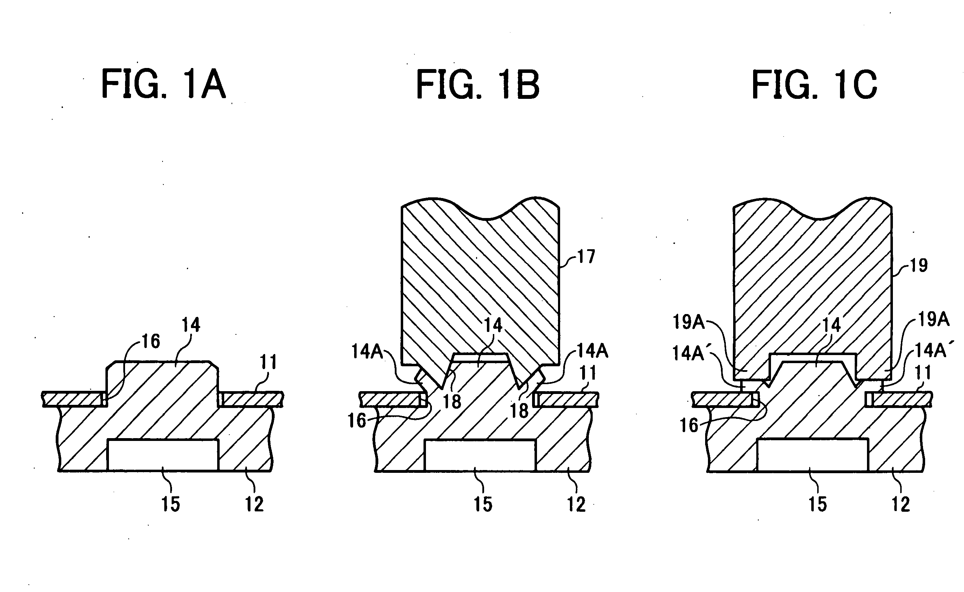

As illustrated in FIG 1 A, a convex part 14 is formed on the support plate 12 (one plate-like member). The convex part 14 is formed by pressing and half die cutting a back surface of the support plate 12, and thus a concave part 15 is formed at the back surface of the support plate 12.

A through-hole 16 which has a larger diameter than a diameter of the convex part 14 is formed in the spring plate 11 (another plate-like member), and the convex part 14 is inserted through the through-hole 16 from a back surface side of the spring plate 11. In this state, as illustrated in FIG 1B, a top surface of the convex part 14 is pressed from above by a first punch 17 (a first pressurizing tool).

At least one pointed end portion 18 having a smaller contour than a contour of the convex part 14 is provided at a lower surface of the first punch 17, and a cut matching the pointed end portion 18 is made at the top surface of the convex part 14 by the pointed end portion 18. Therefore, an outer portion of a cut 14A is formed in the vicinity of the circumference of the convex part 14. In addition, it is possible to control the fastening strength between the spring plate 11 and the support plate 12 by controlling the cut size at this time, as mentioned later.

Next, the first punch 17 is replaced with a second punch 19 (a second pressurizing tool), which has a ring-shaped projection part 19A at its lower end part. The outer portion of the cut 14A is pressed by the second punch 19 and expanded outwardly, and then the vicinity of the through-hole 16 of the spring plate 11 is sandwiched by means of an expanded portion 14A' and a top surface of the support plate 12.

### Embodiment 2

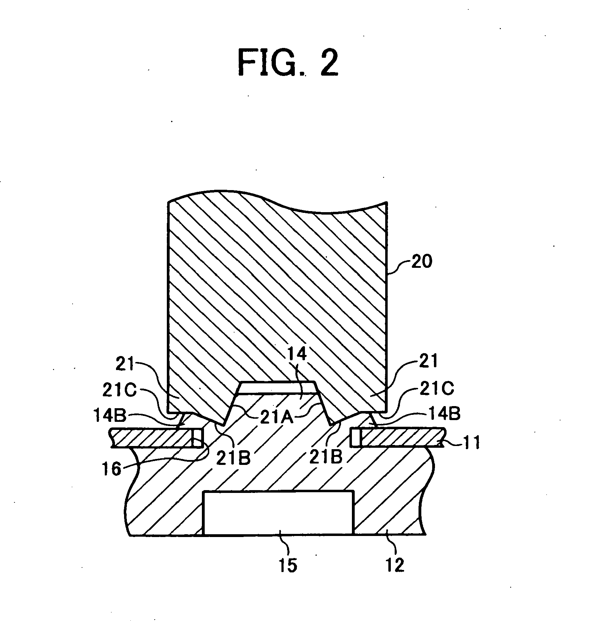

FIG 2 illustrates a fastening method for fastening plate-like members according to the second embodiment of the present invention. In the second embodiment, a process of making a cut at the top surface of the convex part 14 and a process of pressing in order to expand an outer portion of the cut 14B are both performed by one punch 20. That is to say, the punch 20 includes at least one pointed end portion 21 and at least one flat portion 21C at its lower part. Here, the pointed end portion 21 is formed by inclined surfaces of a central axis side wall surface 21A and an outside wall surface 21B of the punch 20, and the flat portion 21C is located outside the outside wall surface 21B.

According to the above-mentioned structure, when the top surface of the convex part 14 is pressed by the punch 20, a cut is made at the top surface of the convex part 14 by the pointed end portion 21, and the outer portion of the cut 14B is pressed so as to expand outwardly, and further, the outer portion of the cut 14B is pressed from above by the flat portion 21C of the punch 20. In this way, the vicinity of the through-hole 16 of the spring plate 11 is sandwiched by means of the outer portion of the cut 14B and the top surface of the support plate 12 and as a result the spring plate 11 and the support plate 12 can be fastened mutually.

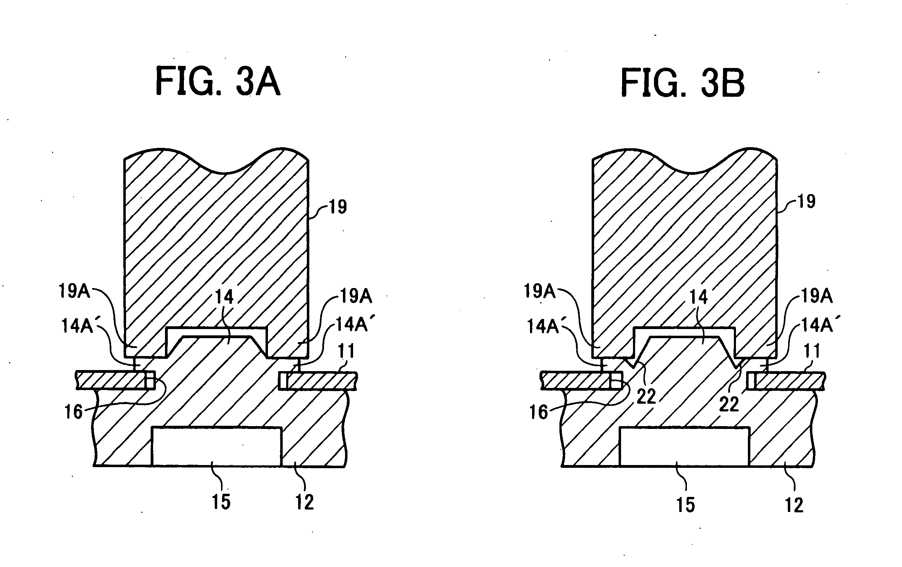

FIGs. 3A and 3B illustrate, according to the first embodiment, the point where the cut size can be controlled when the cut is made at the convex part 14 by the punch 19. That is to say, in FIG. 3A, the cut size is made small, and an impression of the cut does not remain at the circumference of the convex part 14, whereas in FIG. 3B, the cut size is made large, therefore, an impression of the cut 22 (wedge-shaped cross-section) remains at the circumference of the convex part 14. In addition, FIG. 3B illustrates the same view as FIG. 1C.

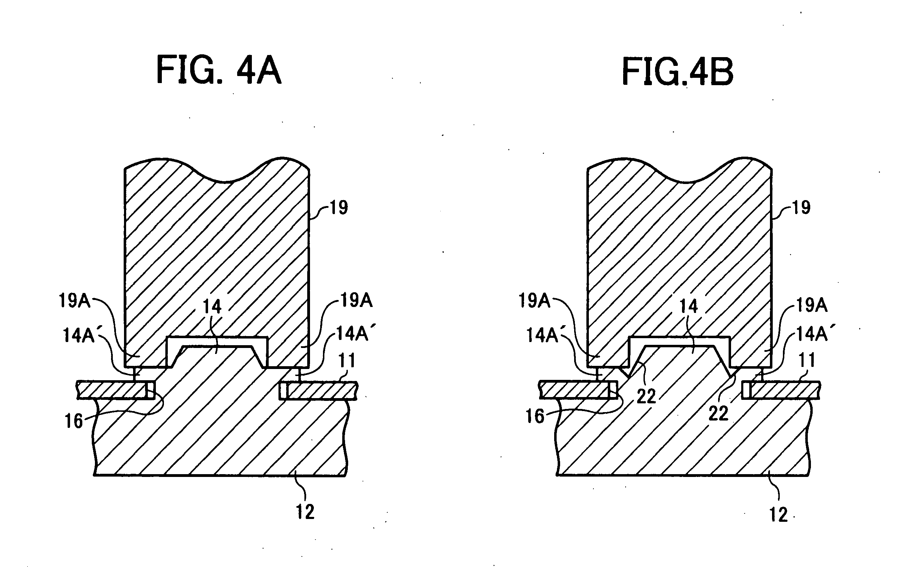

Further, FIGs. 4A and 4B illustrate an example in which, in the first embodiment, when the spring plate 11 is fastened to the support plate 12 in a state in which its lower surface has no concave part (i.e. corresponding to a concave-part 15 illustrated in FIG 1C) formed, control of the cut size is made by the punch 19 at that time. And as illustrated in FIG. 4A, the cut size is made small, and an impression of the cut does not remain at the circumference of the convex part 14, whereas in FIG. 4B. the cut size is made large, therefore, an impression of the cut 22 (wedge-shaped cross-section) remains at the circumference of the convex part 14.

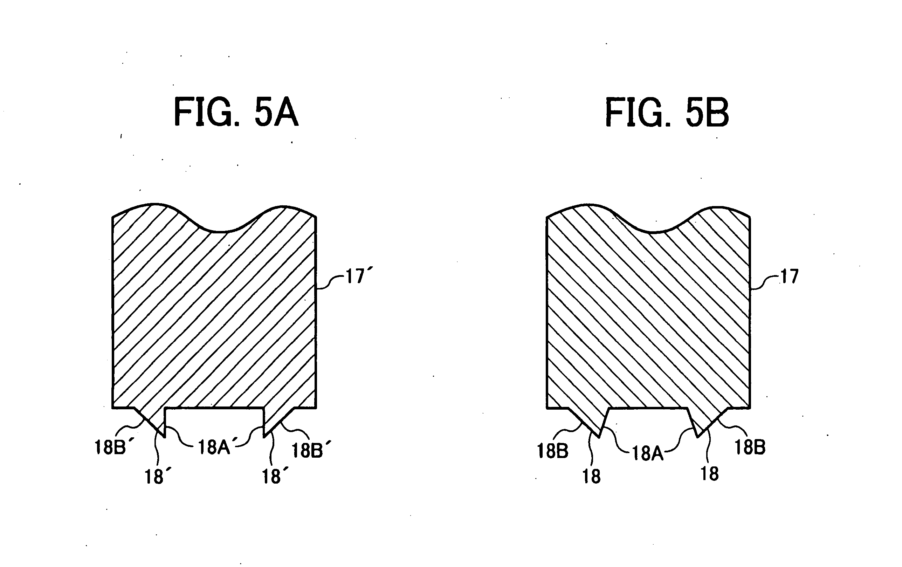

Furthermore, FIGs. 5A and 5B illustrate an example of a case in which, in the first embodiment, a shape of the pointed end portion 18 (or 18') located at the lower portion of the punch 17 (or 17') is changed. In FIG 5A, a pointed end portion 18' of a punch 17' is formed by a vertical surface of a central axis side wall surface 18A' and an inclined surface of an outside wall surface 18B' of the punch 17'. On the other hand, in FIG. 5B, the pointed end portion 18 of the punch 17 is formed by both of inclined surfaces of a central axis side wall surface 18A and an outside wall surface 18B of the punch 17.

In a case illustrated in FIG. 5A, it is possible to narrow an interval between the pointed end portions 18', 18', therefore, the punch 7' corresponds to a case in which even the convex part 14 or the through-hole 16 is small. In addition, in a case illustrated in FIG 5B, it is possible to improve the strength of the pointed end portion 18.

According to the present invention, it is possible to fasten, for example, two plate-like members mutually with high accuracy, and for the fastening strength to not be influenced by temperature change.

It should be noted that although the present invention has been described with respect to exemplary embodiments, the invention is not limited thereto. In view of the foregoing, it is intended that the present invention cover modifications and variations provided that they fall within the scope of the appended claims.

## Claims

1. A method for fastening plate-like members, comprising the steps of:
forming a convex part (14) on a surface of one plate-like member (12);
forming a through-hole (16) which has a larger diameter than a diameter of the convex part (14) in another plate-like member (11);
after inserting the convex part (14) through the through-hole (16), pressing a top surface of the convex part (14) with a first pressurizing tool (17) which includes at least one pointed end portion (18) having a smaller contour than a contour of the convex part (14) to make a cut matching the pointed end portion (18) of the first pressurizing tool (17) at the top surface of the convex part (14); and
fastening the two plate-like members (11,12) mutually by sandwiching in the vicinity of the through-hole (16) of the other plate-like member (11) by means of an expanded portion (14A') formed on the convex part (14) and the surface of the one plate-like member (12),
**characterized in that**
the convex part (14) is further pressed to expand an outer portion (14A) of the cut outwardly by means of a second pressurizing tool (19) having a ring-shaped projection part (19A) at its lower part.

2. The fastening method according to Claim 1, wherein the first pressurizing tool (17') comprises a tool which has the at least one pointed end portion (18') formed by a vertical surface of a central axis side wall surface (18A') of the tool, and an inclined surface of an outside wall surface (18B') of the tool.

3. The fastening method according to Claim 1, wherein the first pressurizing tool (17) comprises a tool which has the at least one pointed end portion (18) formed by inclined surfaces of the central axis side wall surface (18A) and the outside wall surface (18B) of the tool.

4. A method for fastening plate-like members, comprising the steps of:
forming a convex part (14) on a surface of one plate-like member (12);
forming a through-hole (16) which has a larger diameter than a diameter of the convex part (14) in another plate-like member (11);
after inserting the convex part (14) through the through-hole (16), pressing a top surface of the convex part (14) with a pressurizing tool (20) which includes at least one pointed end portion (21) having a smaller contour than a contour of the convex part (14) to make a cut matching the at least one pointed end portion (21) of the pressurizing tool (20) at the top surface of the convex part (14); and
fastening the two plate-like members (11,12) mutually by sandwiching in the vicinity of the through-hole (16) of the other plate-like member (11) by means of an expanded portion formed on the convex part (14) and the surface of the one plate-like member (12).
**characterized in that**
the convex part (14) is further pressed to expand an outer portion (14B) of the cut outwardly by means of at least one flat portion (21 C) located outside the at least one pointed end portion (21) of the pressurizing tool (20).

5. The fastening method according to Claim 4, wherein the pressurizing tool (20) comprises a tool which has the at least one pointed end portion (21) formed by inclined surfaces of a central axis side wall surface (21A) and an outside wall surface (21B) of the tool, and at least one flat portion (21C) located outside the outside wall surface (21B).

6. The fastening method according to Claim 1 or Claim 4, wherein the convex part (14) is formed on the surface of the one plate-like member (12) by pressing and half die cutting a back surface side of the one plate-like member (12).

7. The fastening method according to Claim 1 or Claim 4, wherein a fastening strength between the two plate-like members (11,12) is adjusted by controlling the cut size when making the cut along the at least one pointed end portion (18; 18'; 21) at the top surface of the convex part (14).

8. The fastening method according to Claim 1 or Claim 4, wherein an impression of the cut made by the at least one pointed end portion (18; 18'; 21) remains at the circumference of the convex part (14), when the outer portion of the cut is pressed to expand outwardly.

9. The fastening method according to Claim 1 or Claim 4, wherein an impression of the cut made by the at least one pointed end portion (18; 18'; 21) is obliterated at the circumference of the convex part (14), when the outer portion of the cut is pressed to expand outwardly.

## Patentansprüche

1. Verfahren zum Befestigen plattenartiger Elemente, das die folgenden Schritte umfasst:
Bilden eines konvexen Teils (14) auf einer Oberfläche eines plattenartigen Elements (12);
Bilden eines Durchgangslochs (16), das einen Durchmesser besitzt, der größer ist als ein Durchmesser des konvexen Teils (14) in einem weiteren plattenartigen Element (11);
nach dem Einsetzen des konvexen Teils (14) durch das Durchgangsloch (16) Pressen einer oberen Oberfläche des konvexen Teils (14) mit einem ersten Druckbeaufschlagungswerkzeug (17), das wenigstens einen zugespitzten Endabschnitt (18) mit einem Umriss, der kleiner ist als ein Umriss des konvexen Teils (14), aufweist, um an der oberen Oberfläche des konvexen Teils (14) einen Schnitt zu bilden, der mit dem zugespitzten Endabschnitt (18) des ersten Druckbeaufschlagungswerkzeugs (17) übereinstimmt; und
Befestigen der zwei plattenartigen Elemente (11, 12) aneinander durch Bilden einer Sandwichanordnung in der Umgebung des Durchgangslochs (16) des anderen plattenartigen Elements (11) mittels eines erweiterten Abschnitts (14A'), der am konvexen Teil (14) ausgebildet ist, und der Oberfläche des einen plattenartigen Elements (12),
**dadurch gekennzeichnet, dass**
der konvexe Teil (14) mittels eines zweiten Druckbeaufschlagungswerkzeugs (19), das in seinem unteren Abschnitt einen ringförmigen Vorsprungsabschnitt (19A) besitzt, weiter gepresst wird, um einen äußeren Abschnitt (14A) des Schnittes nach außen aufzuweiten.

2. Befestigungsverfahren nach Anspruch 1, wobei das erste Druckbeaufschlagungswerkzeug (17') ein Werkzeug umfasst, das den wenigstens einen zugespitzten Endabschnitt (18') besitzt, der durch eine vertikale Oberfläche einer Wandoberfläche (18A') des Werkzeugs auf Seiten der Mittelachse und durch eine geneigte Oberfläche einer äußeren Wandoberfläche (18B') des Werkzeugs gebildet ist.

3. Befestigungsverfahren nach Anspruch 1, wobei das erste Druckbeaufschlagungswerkzeug (17) ein Werkzeug umfasst, das den wenigstens einen zugespitzten Endabschnitt (18) besitzt, der durch geneigte Oberflächen der Wandoberfläche (18A) auf Seiten der Mittelachse bzw. der äußeren Wandoberfläche (18B) des Werkzeugs gebildet ist.

4. Verfahren zum Befestigen plattenartiger Elemente, das die folgenden Schritte umfasst:
Bilden eines konvexen Teils (14) auf einer Oberfläche eines plattenartigen Elements (12);
Bilden eines Durchgangslochs (16), das einen Durchmesser besitzt, der größer ist als ein Durchmesser des konvexen Teils (14) in einem weiteren plattenartigen Element (11);
nach dem Einsetzen des konvexen Teils (14) durch das Durchgangsloch (16) Pressen einer oberen Oberfläche des konvexen Teils (14) mit einem Druckbeaufschlagungswerkzeug (20), das wenigstens einen zugespitzten Endabschnitt (21) aufweist, der einen Umriss besitzt, der kleiner ist als ein Umriss des konvexen Teils (14), um in der oberen Oberfläche des konvexen Teils (14) einen Schnitt zu bilden, der mit dem wenigstens einen zugespitzten Endabschnitt (21) des Druckbeaufschlagungswerkzeugs (20) übereinstimmt; und
Befestigen der zwei plattenartigen Elemente (11, 12) aneinander durch eine Sandwichanordnung in der Umgebung des Durchgangslochs (16) des anderen plattenartigen Elements (11) mittels eines erweiterten Abschnitts, der am konvexen Teil (14) ausgebildet ist, und der Oberfläche des einen plattenartigen Elements (12),
**dadurch gekennzeichnet, dass**
der konvexe Abschnitt (14) mittels wenigstens eines ebenen Abschnitts (21C), der sich außerhalb des wenigstens einen zugespitzten Endabschnitts (21) des Druckbeaufschlagungswerkzeugs (20) befindet, weiter gepresst wird, um einen äußeren Abschnitt (14B) des Schnitts nach außen aufzuweiten.

5. Befestigungsverfahren nach Anspruch 4, wobei das Druckbeaufschlagungswerkzeug (20) ein Werkzeug umfasst, das den wenigstens einen zugespitzten Endabschnitt (21), der durch geneigte Oberflächen einer Wandoberfläche (21A) auf Seiten der Mittelachse bzw. einer äußeren Wandoberfläche (21B) des Werkzeugs gebildet ist, und wenigstens einen ebenen Abschnitt (21C), der sich außerhalb der äußeren Wandoberfläche (21B) befindet, besitzt.

6. Befestigungsverfahren nach Anspruch 1 oder 4, wobei der konvexe Teil (14) auf der Oberfläche des einen plattenartigen Elements (12) durch Pressen und Halbabstanzen einer hinteren Oberfläche des einen plattenartigen Elements (12) gebildet wird.

7. Befestigungsverfahren nach Anspruch 1 oder Anspruch 4, wobei eine Befestigungsstärke zwischen den zwei plattenartigen Elementen (11, 12) durch Steuern der Schnittgröße eingestellt wird, wenn der Schnitt längs des wenigstens einen zugespitzten Endabschnitts (18; 18', 21) an der oberen Oberfläche des konvexen Teils (14) gebildet wird.

8. Befestigungsverfahren nach Anspruch 1 oder Anspruch 4, wobei am Umfang des konvexen Teils (14) ein Eindruck des Schnitts, der durch den wenigstens einen zugespitzten Endabschnitt (18; 18'; 21) gebildet wird, zurückbleibt, wenn der äußere Abschnitt des Schnitts gepresst wird, um sich nach außen aufzuweiten.

9. Befestigungsverfahren nach Anspruch 1 oder Anspruch 4, wobei am Umfang des konvexen Teils (14) ein Eindruck des Schnitts, der durch den wenigstens einen zugespitzten Endabschnitt (18; 18', 21) gebildet wird, entfernt wird, wenn der äußere Abschnitt des Schnitts gepresst wird, um sich nach außen aufzuweiten.

## Revendications

1. Procédé de fixation d'éléments en plaque, comprenant les étapes consistant à :
former une partie convexe (14) sur une surface d'un élément en plaque (12);
former un trou de passage (16) qui a un diamètre plus grand qu'un diamètre de la partie convexe (14) dans un autre élément en plaque (11) ;
après l'insertion de la partie convexe (14) à travers le trou de passage (16), presser une surface supérieure de la partie convexe (14) avec un premier outil de presse (17) qui inclut au moins une partie d'extrémité en pointe (18) ayant un contour plus petit qu'un contour de la partie convexe (14) pour faire une coupe correspondant à la partie d'extrémité en pointe (18) du premier outil de presse (17) au niveau de la surface supérieure de la partie convexe (14) ; et
fixer les deux éléments en plaques (11, 12) mutuellement en prenant en sandwich au voisinage de son trou de passage (16) l'autre élément en plaque (11) au moyen d'une partie étendue (14A') formée sur la partie convexe (14) et de la surface du premier élément en plaque (12),
**caractérisé en ce que**
la partie convexe (14) est en outre pressée pour étendre une partie extérieure (14A) de la coupe vers l'extérieur au moyen d'un second outil de presse (19) ayant une partie saillante en forme d'anneau (19A) au niveau de sa partie inférieure.

2. Procédé de fixation selon la revendication 1, dans lequel le premier outil de presse (17') comprend un outil qui a l'au moins une partie d'extrémité en pointe (18') formée par une surface verticale d'une surface de paroi latérale à axe central (18A') de l'outil, et une surface inclinée d'une surface de paroi extérieure (18B') de l'outil.

3. Procédé de fixation selon la revendication 1, dans lequel le premier outil de presse (17) comprend un outil qui a l'au moins une partie d'extrémité en pointe (18) formée par des surfaces inclinées de la surface de paroi latérale à axe central (18A) et la surface de paroi extérieure (18B) de l'outil.

4. Procédé de fixation d'éléments en plaque, comprenant les étapes consistant à :
former une partie convexe (14) sur une surface d'un élément en plaque (12) ;
former un trou de passage (16) qui a un diamètre plus grand qu'un diamètre de la partie convexe (14) dans un autre élément en plaque (11) ;
après l'insertion de la partie convexe (14) à travers le trou de passage (16), presser une surface supérieure de la partie convexe (14) avec un outil de presse (20) qui inclut au moins une partie d'extrémité en pointe (21) ayant un contour plus petit qu'un contour de la partie convexe (14) pour faire une coupe correspondant à l'au moins une partie d'extrémité en pointe (21) du premier outil de presse (20) au niveau de la surface supérieure de la partie convexe (14) ; et
fixer les deux éléments en plaques (11, 12) mutuellement en prenant en sandwich au voisinage de son trou de passage (16) l'autre élément en plaque (11) au moyen d'une partie étendue formée sur la partie convexe (14) et de la surface du premier élément en plaque (12),
**caractérisé en ce que**
la partie convexe (14) est en outre pressée pour étendre une partie extérieure (14B) de la coupe vers l'extérieur au moyen d'au moins une partie plate (21C) située à l'extérieur de l'au moins une partie d'extrémité en pointe (21) de l'outil de presse (20).

5. Procédé de fixation selon la revendication 4, dans lequel l'outil de presse (20) comprend un outil qui a l'au moins une partie d'extrémité en pointe (21) formée par des surfaces inclinées de la surface de paroi latérale à axe central (21A) et la surface de paroi extérieure (21B) de l'outil, et au moins une partie plate (21C) située à l'extérieur de la surface de paroi extérieure (21B).

6. Procédé de fixation selon la revendication 1 ou la revendication 4, dans lequel la partie convexe (14) est formée sur la surface du premier élément en plaque (12) en pressant et poinçonnant à moitié un côté de surface arrière de l'élément en plaque (12).

7. Procédé de fixation selon la revendication 1 ou la revendication 4, dans lequel une force de fixation entre les deux éléments en plaques (11, 12) est ajustée en contrôlant la taille de la coupe lors de la coupe le long de l'au moins une partie d'extrémité en pointe (18; 18'; 21) au niveau de la surface supérieure de la partie convexe (14).

8. Procédé de fixation selon la revendication 1 ou la revendication 4, dans lequel une impression de la coupe faite par l'au moins une partie d'extrémité en pointe (18; 18'; 21) reste au niveau de la circonférence de la partie convexe (14), quand la partie extérieure de la couple est pressée pour s'étendre vers l'extérieur.

9. Procédé de fixation selon la revendication 1 ou la revendication 4, dans lequel une impression de la coupe faite par l'au moins une partie d'extrémité en pointe (18; 18'; 21) est effacée au niveau de la circonférence de la partie convexe (14), quand la partie extérieure de la coupe est pressée pour s'étendre vers l'extérieur.
